# EUROPEAN PATENT SPECIFICATION

(11) **EP 2 478 206 B1**
(45) Date of publication and mention of the grant of the patent: **12.12.2018**
(21) Application number: 10815690.2
(22) Date of filing: 14.09.2010
(51) Int. Cl.: F02M 35/022, B01D 45/04, B01D 45/12, F02M 35/10, F02M 35/16

(54) **PARTICLE TRAP AND FILTER DEVICE COMPRISING A PARTICLE TRAP**
PARTIKELFÄNGER UND FILTERVORRICHTUNG MIT EINEM PARTIKELFÄNGER
PIÈGE À PARTICULES, ET DISPOSITIF DE FILTRE COMPRENANT UN PIÈGE À PARTICULES

(30) Priority: 14.09.2009 WO PCT/SE2009/000408
(43) Date of publication of application: 25.07.2012
(73) Proprietor: Volvo Lastvagnar AB, 405 08 Göteborg (SE)
(72) Inventor: ETEMAD, Sassan, S-426 79 Västra Frölunda (SE); RYRHOLM, Reimer, S-442 75 Lycke (SE)
(74) Representative: Volvo Technology Corporation
(86) International application number: PCT/SE2010/000224
(87) International publication number: WO 2011/031205

(56) References cited:
- EP-A1- 0 623 375
- EP-A1- 1 918 009
- GB-A- 236 452
- US-A- 1 838 117
- US-A- 3 710 561
- US-A- 4 159 899
- US-A- 4 292 050
- US-A1- 2004 025 481
- US-A1- 2004 025 481
- US-A1- 2004 031 247
- US-A1- 2007 125 051
- US-A1- 2009 026 761

## Description

### TECHNICAL FIELD

The invention relates to the field of removing particles form a fluid. More specifically, the invention relates to a particle trap and a filter device comprising a particle trap.

### BACKGROUND OF THE INVENTION

It is known in the art that many kinds of fluids are contaminated with particles and have to be purified before the fluid can be used. For instance, air used in combustion engines is sucked from the ambient so that particles such as dust or water droplets carried in the fresh air have to be filtered out before the air is transported into the combustion engine.

US-A-5,034,036 discloses a water separation device configured to be mounted to a housing of an air cleaner in an air intake system of an internal combustion engine. The housing has an air inlet opening, an air outlet, opening having an internal bellmouth section which feeds an air intake port of the air cleaner and which defines a circuitous air flow path, including a section with a 180° turn. The circuitous air flow path causes multiple directional changes to air flowing through the flow path. As a result, water particles in the air are thrown off during the directional changes by centrifugal force.

US 2004/0025481 A1 discloses a pre-separator device which removes contaminants from dirty air. The device comprises a tubular housing which includes a central body connected to a plurality of guiding vanes. The central body includes a leading nose-cone portion and a trailing nose-cone portion. An exit tube defines an outlet that is sized and positioned relative to the central body for receiving the cleaned air-flow flowing downstream from the inlet of the device. The tubular housing also includes a collection chamber adjacent to the second end of the tubular housing. The contaminants separated from the air stream are collected and stored in the collection chamber.

US 2007/0125051 A1 discloses a water separator for an air-conditioning system in an airplane. The air stream is set into a swirling movement by a swirling device which is placed in the conduit upstream from a collection chamber for the water.

US 4,159,899 A discloses a pre-cleaner assembly for an air intake which includes guiding vanes in a diverging portion of the air duct. The guiding vanes direct the incoming air to induce a vortex or spiral path which causes particles in the incoming air to be thrown out of the incoming air stream EP1918009 A1 discloses an air precleaner arrangement for an internal combustion engine comprising two cyclone filters. US 3710561 discloses an apparatus for separating solid particles suspended in a gaseous stream with a collector compartment to receive dust separated particles.

### SUMMARY OF THE INVENTION

It is an object of the invention to provide an economic and compact particle trap with a high efficiency and reduced fuel consumption.

Another object is to provide a filter device comprising a particle trap.

The objects are achieved by the features of the independent claim 1. The other claims, the drawing and the description disclose advantageous embodiments of the invention.

A particle trap for removing particles from a fluid is proposed, according to claim 1.

Favourably, an effective separation of particles from the fluid can be achieved. The particle content in the first region can be as high as 90% or higher compared to the particle content in the fluid upstream of the bend. Favourably, the filter element can be used a longer time before it is congested and needs to be replaced. Favourably, it might not be necessary to provide a filter material for filtering the particles out of the fluid. Consequently, costs for a filter element and costs for replacing or cleaning congested filter elements can be saved as well as space for such filter elements in the conduit. An inlet of a conduit can extend into the first region for guiding away the purified fluid, additionally or alternatively, the second region can be separated by a wall or conduit from the first region for guiding away the particles. A particle trap can be arranged in at least one bend of the conduit. The invention can make use of swirls which are formed in bends when a fluid flows through the bend, which swirls separate particles from the fluid. The particles accumulate in a narrow zone near the wall of the conduit and can be removed from the near wall zone easily. Removing the particles can be improved by adding an assisting suction.

Operation of the conduit refers to the normal operation conditions of the conduit, for instance an air duct, which is designed for defined operation conditions such as fluid mass flow and fluid speed. The region where the separation between the fluid with high particle concentration and the fluid with low particle concentration is dominated by a swirl movement of the fluid created by the bended region which can be derived e.g. by fluid mechanics calculations concerning the specific design parameters and operation conditions for the conduit. Such calculations are well known to a person skilled in the art of design of fluid conduits.

The bended region may comprise a single bend or a multi-bend structure with two or more bends. Of course, a conduit may comprise a single bend and a multi-bend structure. A single bend, i.e. a bend with its deflection angle in one plane, can generate a pair of counter rotating swirls arranged side by side, whereas a bended region with two or more subsequent bends (with deflection angles in different planes) can generate a single swirl downstream the bended region. The centre region of a swirl includes a reduced number of particles, whereas the outer region of the swirl is particle rich. The flow of the fluid in a bend can be regarded as decomposed in two motions: a primary motion in a longitudinal direction and a secondary motion in a rotational direction about the longitudinal direction. The primary motion corresponds substantially to the conduit longitudinal orientation carrying the fluid from the inlet to the outlet. Due to the curvature of the conduit, the primary motion is also curved and therefore the primary motion corresponds to a centrifugal movement of particles in the fluid to the outer side of the bend, whereas the secondary motion creates a centrifugal movement of the particles about the centre of the swirl. Both effects can be combined for removing particles from the fluid. For instance, a tube or conduit can extend with its opening into the central region of the swirl.

According to the invention, a collector compartment is provided for collecting the particles in the particle-rich fraction of the fluid. Expediently, the collector compartment can be arranged in the second region where the particle concentration is high and where outer regions of one or more swirls generated by the bended region have a high particle concentration. The collector compartment can efficiently support the separation of the particles from the fluid by forcing the particles in the second region to enter a region where they can not mix again with the purified fluid in the centre of the one or more swirls. Advantageously, in case of a bended region with a single bend, the collector compartment has one or more slot-like openings extending in a longitudinal direction along the bend with a slot-like opening having a width in circumferential direction of the conduit. In the case of a bended region with two or more subsequent bends, the collector compartment can be a pocket between the conduit and a coaxial arranged tube through which the purified fluid moves or a collector compartment arranged at an inside of the wall with a slot-like opening with a width or clearance which in radial or tangential direction so that the upper side of the collector compartment has a distance to the wall.

The collector compartment can be arranged inside the conduit. The particles which enter the collector compartment are safely kept in the compartment and can be discharged through the second outlet.

The collector compartment can be extending essentially parallel to an adjoining wall portion of the conduit wall, with a closed end close to the downstream end and its leading edge close to the upstream side of the bend in the conduit. The leading edge can be closed. Alternatively the leading edge can be open. The particles in the fluid resulting from the one or more swirls can easily enter the collector compartment from above, i.e. in a direction crosswise to the longitudinal flow direction. The particles which enter the collector compartment are safely kept in the compartment and can be discharged through the second outlet.

The one or more slot-like openings can be expediently arranged in a proper geometrical relation to the size of the bend, the curvature of the bend, the cross section of the bend and the like in order to maximize the particle separation from the primary flow (i.e. a primary motion in a longitudinal direction) of the purified fluid. The slot-like openings can be arranged parallel to each other and/or in series. If the geometrical constraints are such that more than one pair of swirls are generated, the proper location of such slot-like openings can be estimated by model simulations, for instance. In such a case there can also be more than one second opening which can be arranged appropriately. However, if the geometrical constraints are chosen properly so that only one pair of swirls is generated by a single bend, an expedient position where the particles accumulate can be easily determined as it is mostly on or near the symmetry plane between the pair of swirls. In case of geometrical constraints generating only a singe swirl, the collector compartment may be arranged in a substantially straight portion of the conduit adjacent the bended region.

Expediently, the collector compartment can have a clearance to the adjoining wall portion of at most 20%, preferably at most 15%, more preferably at most 10% of the hydraulic diameter. The size of the bend remains virtually unchanged for the fluid which can pass the bend virtually undisturbed. In case of a bended region with two or more bends it is advantageous if a diameter of a pipe for guiding the purified fluid arranged coaxially to the wall is about 97%, preferably between 95% and 20% of the hydraulic diameter of the wall, preferably between 75% and 85%, more preferably between 70% and 80% of the hydraulic diameter of the wall of the conduit.

Particularly, use can be made of one or more already existing bends in a curved conduit without virtually changing the overall layout of the conduit. It is expedient if a long conduit is provided at the upstream side of the bend, as the effect of separating the particles from the fluid is enhanced.

A cross section of the inlet of the conduit has an aspect ratio of a maximum extension in a principal direction divided by an extension in a direction perpendicular to the principal direction of not more than 4, preferably not more than 3 and of not less than 1/5, preferably not less than 1/2.

According to a favourable embodiment of the invention, the bend may be a single bend having a U-shape or an L-shape, wherein preferably the bend may deflect the flow of the fluid by an angle between more than 0 degrees and 180 degrees, particularly by at least 60 degrees, more particularly by at least 90 degrees. Preferably, in a bended region with a single bend the at least one second outlet may be arranged in a portion of the bend downstream of a bend mid-point or in the second half of the bend. For instance the at least one second outlet can be arranged in the rearmost third portion of the bend. Favourably, the at least one second outlet can be arranged in a region where the particles accumulate and the particle concentration is high. For instance, the second outlet can be an opening in the wall to which a conduit is attached.

Such a deflection can provide an effective generation of one or more swirls, and, as a result, an effective separation of particles from the fluid. An angle of 180 degrees corresponds to a U-bend, whereas an angle of 0 degrees corresponds to no bend (no deflection), i.e. a straight movement. It is to be understood that a value for a specific angle includes also a mirror-symmetric angle, i.e. an angle of 360 degrees minus the specific angle. For instance, an angle of 30 degrees is equivalent to an angle of 330 degrees and so forth. Particularly in a bended region with two or more bends, one or more bends deflect the flow direction of the fluid by an angle between 20 degrees to 160 degrees (or 340 degrees to 200 degrees). Favourably, use can be made of swirl generation in a bended region of a conduit. According to a favourable improvement, the at least one second outlet can be arranged at an outer wall portion of the conduit with respect to a centre of curvature of the bend. At the outer wall portion, in the middle, i.e. near a symmetry plane if the shape is symmetrical, the particle concentration can be higher than at an inner wall portion.

Advantageously, the at least one second outlet may have a cross-sectional area of at least 1 %o of a cross-sectional area of the conduit at the location of the at least one second outlet and at most 25%, preferably at most 20%, of a cross-sectional area of the conduit at the location of the at least one second outlet. Expediently, a loss of fluid flow can be restricted so not to loose more than about 15%, preferably not more than about 10%, more preferably not more than about 5% of the flow.

According to a favourable embodiment of the invention, in case of a bended region with a single bend, the first outlet may comprise two tubes arranged side by side, each tube being assigned to a central region of a swirl generated in the fluid. As two swirls are generated by the single bend a high output of purified fluid can be achieved.

A turn or deflection of the flow direction can also be achieved for instance by arranging two or more bends in series. In the bend, the centrifugal force acting on the fluid and hence the particles therein is in equilibrium with the opposing pressure force. However, in the friction dominated layer near the wall, known as boundary layer, due to the lower velocity, the centrifugal force becomes weaker and thereby its opposing pressure force starts a rotational secondary motion. This motion is known as secondary vortex in the field of fluid mechanics. The secondary vortex character and strength may depend on parameters such as the inlet length, bend curvature and aspect ratio of the cross section and so forth. In a favourable design of a single bend the secondary vortex may comprise a pair of gradually growing counter rotating swirls. Favourably, if the boundary layer is thick the swirls grow faster and stronger. If the bend cross section is not appropriate, there will be at least a second pair of counter rotating swirls (but smaller) between or alternatively outside the first pair of swirls rotating in harmony with the first pair. In such a case there may be more positions where the particles accumulate near the wall. On the other hand, in a favourable design of two or more bends in series, the secondary motion generates a single swirl downstream of the bended region.

According to an example, not part of the invention, when two or more bends are used in series, the distance between two subsequent bends is at least 25% of the hydraulic diameter of the conduit and at most of the order of four times the hydraulic diameter. The hydraulic diameter is defined as four times the cross-section area of the main flow conduit divided by its cross-section periphery (4*area/periphery). The hydraulic diameter is used as reference length for non-circular cross section shapes. The hydraulic diameter is equal to the diameter for a circular shape. Each of such bends may have a deflection angle between 20 degrees and 160 degrees, preferably between 30 degrees and 120 degrees. The purified fluid, e.g. air, is extracted from the main conduit after the last bend with at least one first outlet conduit which is smaller in cross section than the main conduit. The hydraulic diameter of the first outlet conduit is typically between 30% and 95% of the hydraulic diameter of the main conduit. The first outlet conduit is extended inside the main conduit in order to create a gap between the main conduit and the first outlet conduit. The length of the extended part of the first outlet conduit inside the main conduit should be at least 1% of the hydraulic diameter and at most eight times as long as the hydraulic diameter. The mentioned gap between the two conduits acts as a pocket or collector compartment where the particles under the influence of the swirl are thrown against the outer wall and stay trapped between the main conduit wall and first outlet wall. For removing or scavenging of the particle-rich flow in the gap between the two mentioned conduits, at least one second outlet is needed. The cross-sectional area of the at least one second outlet is at least 1 ‰ of a cross-sectional area of main conduit. Expediently, a loss of fluid flow can be restricted so not to loose more than about 15%, preferably not more than about 10%, more preferably not more than about 5% of the flow.

Preferably, in a bended region having at least two bends, the upstream side of the preceding bend is arranged in a different plane than a downstream side of the subsequent bend.

According to a favourable embodiment of the invention, in case of a bended region having at least two bends, the at least one first outlet may be arranged in a predominantly straight portion of the conduit downstream of the bended region. A single swirl can be generated by the bended region in which there are two or more bends. Advantageously, each bend following a preceding bend may deflect the flow in a direction away from the plane of the preceding bend. The single swirl in the straight portion of the conduit is strengthened.

According to another aspect of the invention, an air filter device is proposed comprising a particle trap according to any of the features described above. Favourably the air filter device can be used for cleaning air for a vehicle, for instance for a combustion engine, or for cleaning air for a ventilation device in buildings, tunnels or the like. Advantageously, as the particle trap is associated with a bend of a conduit of the air filter, the layout of the conduit can easily be adapted to the requirements of the application area of the air filter.

According to another aspect of the invention, an air supply for an engine comprises such a particle trap. The engine can be an engine of a stationary power source or a vehicle engine, particularly the engine of a truck.

According to another aspect of the invention, an air condition device comprises such a particle trap. Expediently, bends in the air conduit can be used for providing the particle trap described above.

According to another aspect of the invention, a vehicle is proposed which comprises such a particle trap. Preferably, the vehicle can be a truck.

### BRIEF DESCRIPTION OF THE DRAWINGS

The present invention together with the above-mentioned and other objects and advantages may best be understood from the following detailed description of the embodiment(s), but not restricted to the embodiments, wherein is shown schematically:
- Fig. 1: an example of a particle trap in a perspective top view of a conduit comprising the particle trap;
- Fig. 2a, 2b: a perspective view on a bend illustrating a first outlet of the particle trap (Fig. 2a), and a cut through the bend illustrating the first and a second outlet (Fig. 2b);
- Fig. 3a, 3b: a perspective oblique view of an example of a particle trap from above (Fig. 3a) and in a side view (Fig. 3b);
- Fig. 4a, 4b: side cut views through example embodiments of particle traps with collector compartments attached to the conduit;
- Fig. 5: a top view of a particle trap with a collector compartment inside a conduit;
- Fig. 6a-6d: a perspective oblique view of an example of a particle trap from above with a swirling flow after a double bend conduit with two deflection angles (Fig. 6a) and with 5 deflection angles (Fig. 6b), alternative embodiments of a downstream section of a multi-bend structure (Fig. 6c, 6d) ; and
- Fig. 7: an example embodiment of a vehicle comprising a particle trap in an air supply according to the invention.

### DETAILED DESCRIPTION OF PREFERRED EMBODIMENTS OF THE INVENTION

In the drawings, equal or similar elements are referred to by equal reference numerals. The drawings are merely schematic representations, not intended to portray specific parameters of the invention. Moreover, the drawings are intended to depict only examples and embodiments of the invention and therefore should not be considered as limiting the scope of the invention.

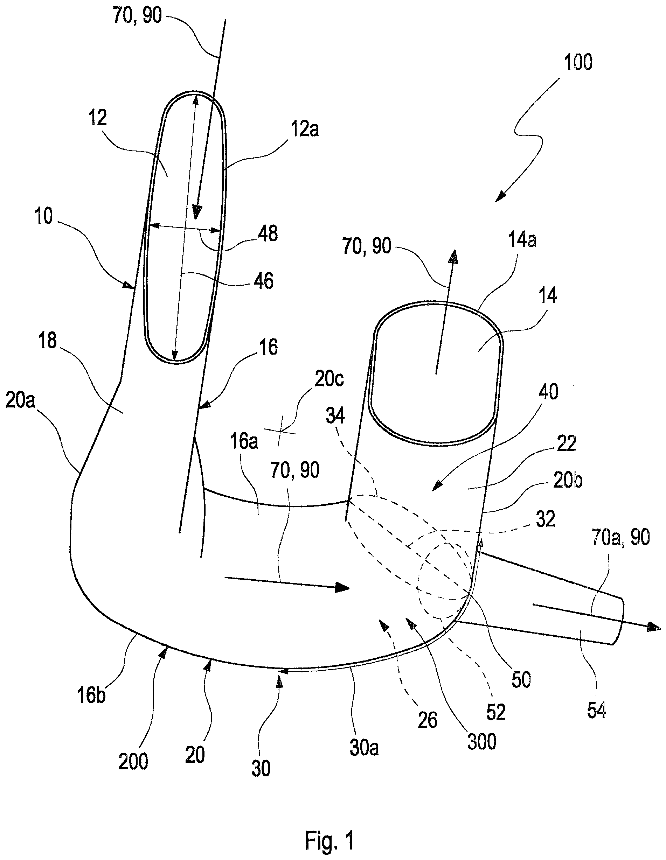

Fig. 1 depicts schematically a simplified example of a particle trap 100 in a perspective top view of a conduit 10 comprising the particle trap 100 for purifying a fluid 90.

The conduit 10 comprises a wall 16, an inlet 12 and a main outlet 14. In between, a bended region 20 comprising a single bend 200 is arranged with an upstream side 20a and a downstream side 20b with respect to a flow direction 70 of the fluid 90. The bended region 20 and the bend 200, respectively, are arranged between a straight upstream conduit 18 and a straight downstream conduit 22. The particle trap 100 is employed for removing particles from the fluid 90 entering the inlet 12 of the conduit 10, for instance particles form an air stream. The purified fluid 90 leaves the bend 200 through a conduit 10 at the main outlet 14.

The inlet 12 may have for instance an oval cross section 12a with a long main axis 46 and a smaller minor axis 48 providing an oval shaped cross section and the outlet 14 may have another shape of a cross section 14a, for instance an oval shape with main and minor axes comparable in size.

A cross section 12a of the inlet 12 of the conduit 10 has, according to the invention, an aspect ratio of a maximum extension of the main axis 46 divided by an extension of the minor axis 48 in a direction perpendicular to the principal direction of not more than 4, preferably not more than 3 and of not less than 1/5, preferably not less than 1/2. In this range the aspect ratio is favourably enhancing the effect of the swirls generated in the bend 200 with respect to separation of the particles from the fluid. Particularly, the aspect ratio impacts the swirl strength which in turn impacts separation efficiency. The pair of swirls may be created at the same radius with respect to the centre of curvature 20c, wherein particularly the swirls are generated gradually, not at a given position.

In this example, the bend 200 deflects the fluid flow by at least 90 degrees, here by 180 degrees. The angle values represent the deflection angles that the flow experiences. An angle of 0 degrees refers to a straight conduit and 180 degrees for a U-bend and 90 degrees for an L-bend.

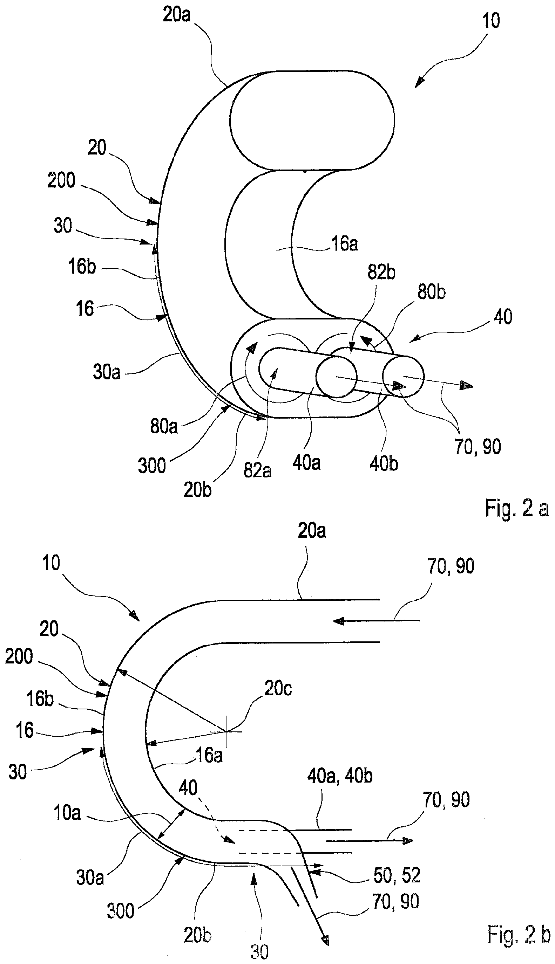

The bend 200 has an inner side 16a closer to a centre of curvature 20c and an outer side 16b farther away from the centre of curvature 20c. A first outlet 40 (an example is shown in more detail Fig. 2a, 2b) is arranged in a first region 26, at a distance from the wall 16, where the concentration of particles in the fluid 90 is lower than in the vicinity of the wall 16 during operation.

A second outlet 50 is arranged in the vicinity of the wall 16 where the concentration of particles is higher than at the first outlet 40 at the downstream side 20b of the bend 200. A conduit 54 is arranged at the second outlet 50. The particles can be removed from the conduit 10 through the second outlet 50. For an efficient removal of the particles, the at least one second outlet 40 is arranged in a portion 30a of the bend 200 downstream of a mid-point 30 of the bend 200, for instance in the last third portion of the bend 200. The second outlet 50 has a cross-sectional area 52 of at least 1 %o of a cross-sectional area 34 of the conduit 10 at the location 32 of the at least one second outlet 50 and at most 25%, preferably at most 20%, of a cross-sectional area 34 of the conduit 10 at the location 32 of the at least one second outlet 50.

Figs. 2a and 2b illustrate the way of action of the particle trap 100 of Fig. 1 in more detail, wherein Fig. 2a shows in a simplified way a perspective view on the bend 200 with the first outlet 40 of the particle trap 100 consisting of two tubes 40a, 40b and Fig. 2b shows a cut through the bend 200 illustrating the first outlet 40 as inlets of tubes 40a, 40b and the second outlet 50.

When the fluid 90 enters the bended region with the U-shaped bend 200, the main flow of the fluid passes the bend 200 performing a primary motion in a longitudinal direction. Due to the interaction between wall friction, acting pressure force and centrifugal force in the fluid 90 a secondary motion in a rotational direction about the longitudinal direction is generated, the character of which varies from case to case. With the proper geometrical conditions, such as a reasonable cross section of the bend 200, a reasonable length of the upstream conduit 18 of the bend, the curvature of the bend 200, the secondary flow comprises two counter rotating swirls 80a, 80b or vortices.

The counter rotating swirls 80a, 80b are arranged side by side in the fluid 90. In a central region 82a, 82b of each of the swirls 80a, 80b the fluid 90 is depleted from particles and thus purified from particles. The particles accumulate at the outer region of the swirls 80a, 80b in a narrow region inside of the outer wall portion 16b. Referring now also to Fig. 1 the second outlet 50 is arranged at the downstream side 20b of the bend 200 in the outer wall portion 16b of the conduit 10.

Particle-rich fluid leaves the conduit 10 through the second outlet 50 and purified fluid 90 leaves the bend 200 through the first outlet 40, e.g. through inlets of two tubes 40a, 40b arranged side by side. However, it is also possible to avoid the tubes 40a, 40b and use the downstream conduit 22 (Fig. 1) for transporting the purified fluid 90 from the centres of the counter rotating swirls 80a, 80b from the first outlet 40 to the main outlet 14 (Fig. 1) of the conduit 10. The region 300 can be considered as the region where the particle-rich fluid is separated from the particle-depleted fluid by the second outlet 50.

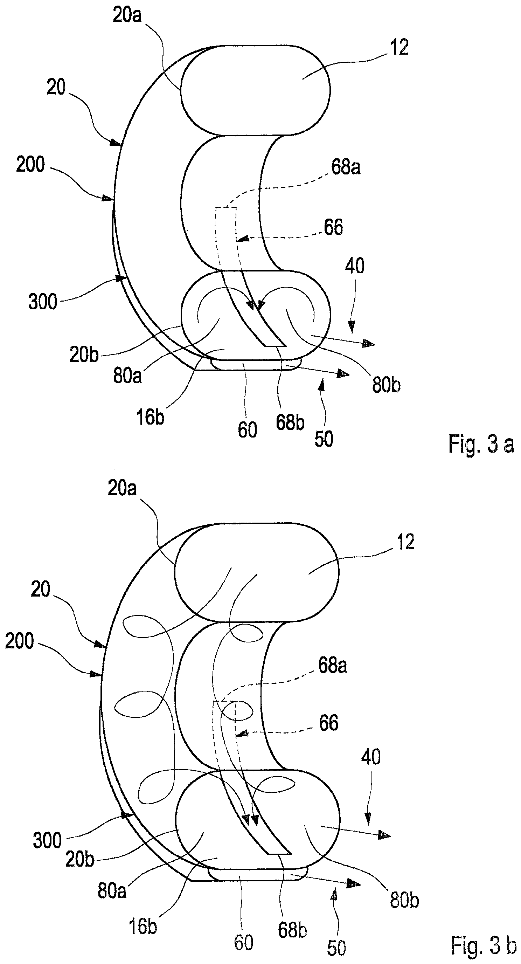

Figs. 3a and 3b illustrate the effect of the swirls 80a, 80b. The particles are forced by the swirls 80a, 80b generated by the U-shaped bend 200 to the outer wall portion 16b. The particle-rich fluid flow can be kept there by a collector compartment 60, and discharged through the second outlet 50. Typically, the particles are multiply reflected in the collector compartment 60 before they enter the outlet 50. The collector compartment 60 prevents the particles from re-entering the purified fluid flow. The collector compartment 60 is attached to the outside of the conduit 10. The particle rich fluid can enter the collector compartment 60 through a slot-like opening 60 arranged in the wall 16 of the bend 200. In this example for instance, the leading edge 66a of the opening 66 is closed.

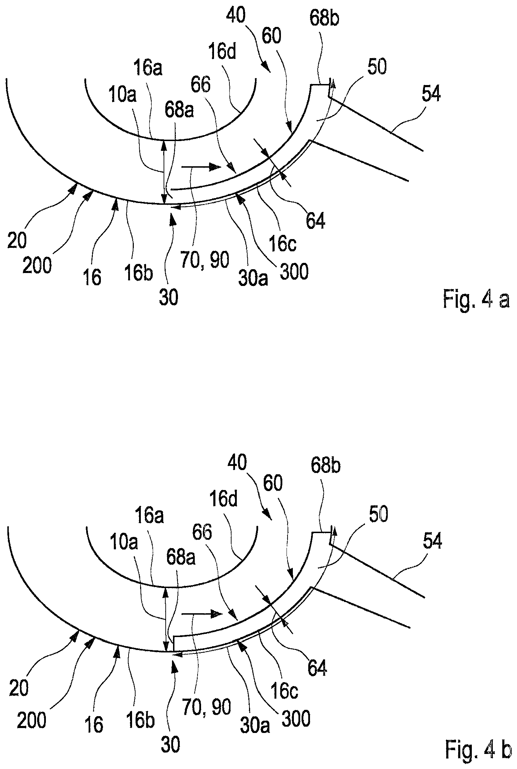

Figs. 4a and 4b display side cut views through example embodiments of particle traps displaying different reflector elements 60 arranged inside the conduit 10.

Fig. 4a illustrates a collector compartment 60 formed inside the conduit extending essentially from a first end 68a to a second end 68b parallel to the adjoining wall portion 16c at the outer wall portion 16b of the conduit wall 16 in a direction opposite to the flow direction 70 in the conduit 10. A clearance 64 is established between the upper side of the collector compartment 60 and the inside of the adjoining wall portion 16c forming the bottom of the collector compartment 60.

Particle-rich fluid 90 can enter the clearance through an opening 66 in upper side of the collector compartment 60. Preferably, the opening 66, e.g. a slot, extends in a longitudinal direction along the bend 200.

Fig. 4a indicates the collector compartment 60 with an open leading edge 68a. in this embodiment, particles carried in the primary flow can also be collected together with particles moving in the rotational secondary vortex. Fig. 4b illustrates the collector compartment 60 with a closed leading edge 68a. Advantageously, particles can also enter the clearance through the gap at the leading edge 68a if it is open.

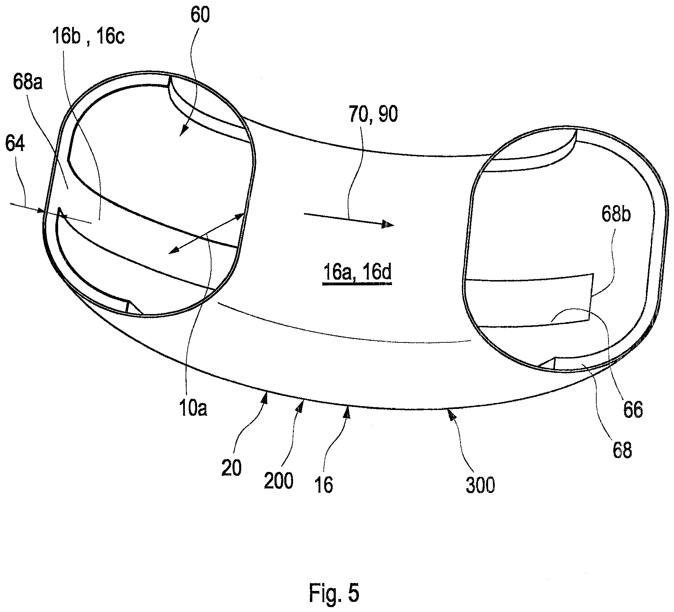

Fig. 5 shows an example embodiment of a bend 200 with a collector compartment 60 according to Fig. 4a as a top view on the bend 200 cut away from the upstream and downstream conduits 18, 22. The view reveals the slot-like opening 66 above the outer wall portion 16b of the bend 200. The slot-like opening 66 extends between an open end 68a and a closed end 68b parallel to the adjoining wall portion 16c at the outer wall portion 16b of the conduit wall 16 in a direction along the flow direction 70 in the conduit 10.

The clearance 64 between the upper side of the collector compartment 60 and the adjoining wall portion 16c can be at most 20%, preferably at most 15%, more preferably at most 10% of a distance 10a between the adjoining wall portion 16c and a wall portion 16d of the inner wall portion 16a opposite to the adjoining wall portion 16c in the bend 200.

Particle-rich fluid can enter the slot-like opening 66 predominantly from above so that particles remain in the clearance 64 of the collector compartment 60. The second opening is arranged between the end of the slot-like opening 66 in the collector compartment 60 and the closed end 68b of the collector compartment 60 so that the particle-rich fluid can be discharged through the second opening (not shown). The slot-like opening 66 is arranged in or near the symmetry plane of the generated pair of swirls. In case of geometrical constraints where more than one pair of swirls is created, there can more than one slot-like opening 66 be provided.

As already mentioned, it is expedient for enhancing the effect of the swirl generation if the upstream conduit 18 is long compared to the bend 200. The downstream conduit 22 may be shorter than the upstream conduit 18.

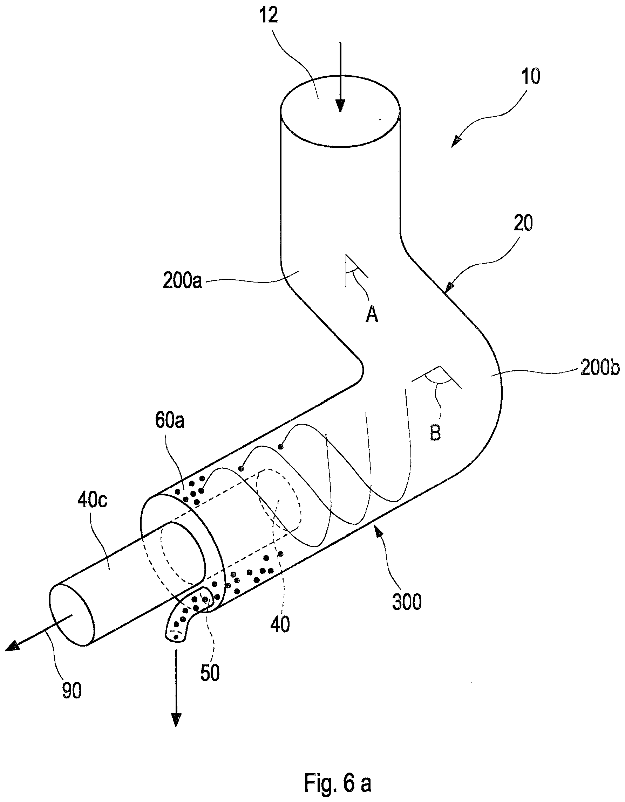

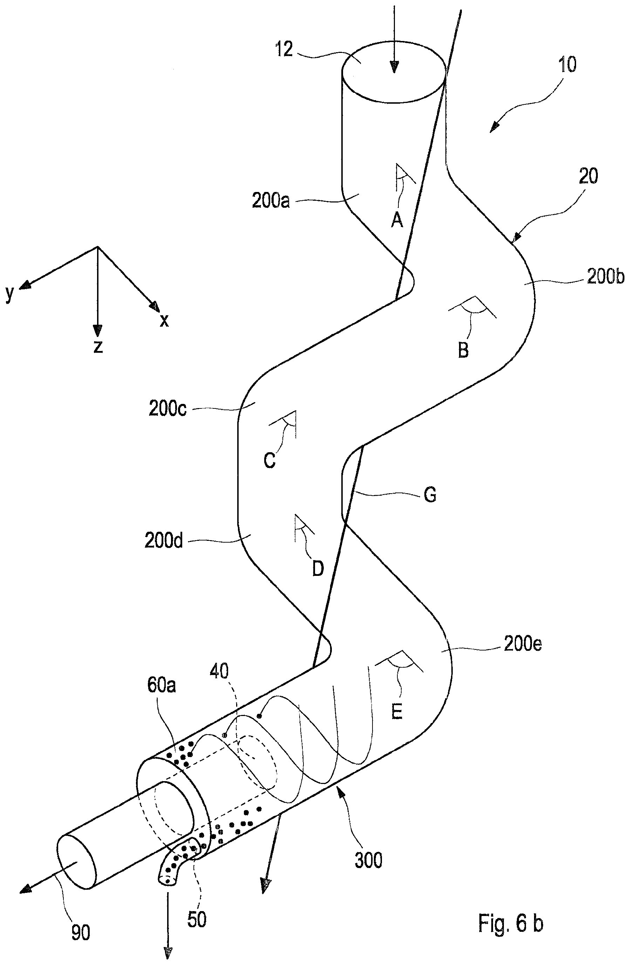

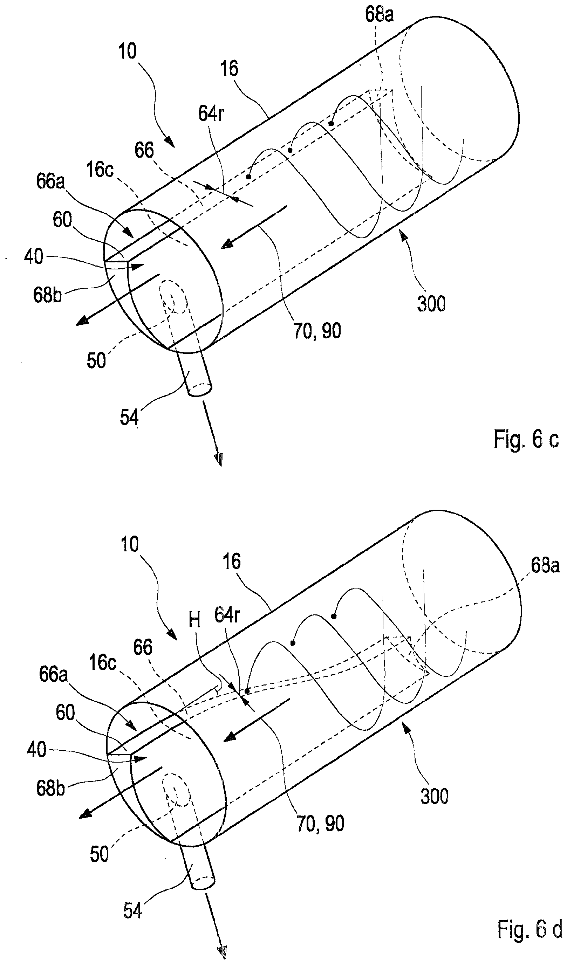

Fig. 6a and 6b depict a perspective oblique view of an example of a particle trap from above with a swirling flow after a double bend conduit with two deflection angles (Fig. 6a) and more than two bends (Fig. 6b). The upstream side of the preceding bend, e.g. 200a, is arranged in a different plane than a downstream side of the subsequent bend, e.g. 200b. Figs. 6c and 6d show examples of a downstream side of the multi-bend structure.

According to an example, when two bends 200a, 200b or more are used in series, wherein the distance between two subsequent bends is at most of the order of four times the hydraulic diameter and at least 25% of the hydraulic diameter.

The hydraulic diameter is defined as four times the cross-section area of the main flow conduit divided by its cross-section periphery (4*area/periphery). The hydraulic diameter is used as reference length for non-circular cross section shapes. The hydraulic diameter is equal to the diameter for a circular shape.

In Fig. 6a the first bend 200a of the bended region 20 deflects the flow of the fluid 90 by e.g. an angle A of 90 degrees from z-direction to x-direction and the subsequent bend 200b deflects the flow of the fluid 90 by e.g. an angle B of 90 degrees from x-direction to y-direction. Preferably, each of the bends 200a, 200b has a deflection angle between 20 degrees and 160 degrees, preferably between 30 degrees and 120 degrees. The purified fluid 90, e.g. air, is extracted from the main conduit 10 after the last bend 200b (Fig. 6a) or 200e (Fig. 6b) with at least one primary outlet conduit which is smaller in cross section than the main conduit 10.

The hydraulic diameter of the primary outlet conduit 40c is typically between 30% and 95% of the hydraulic diameter of the main conduit 10. The conduit 40c arranged at the first outlet 40 extends inside the main portion of conduit 10 in order to create a gap 60a between the main portion of conduit 10 and the first outlet conduit 40c. The length of the (predominately straight) extended part between two subsequent bends 200a, 200b should be at least 1% of the hydraulic diameter and at most eight times as long as the hydraulic diameter of the conduit 10 at the respective extended parts.

The mentioned gap 60a between the main portion of conduit 10, and the first outlet conduit 40c acts as a pocket where the particles under the influence of the swirl are thrown against the outer wall 16 and stay trapped between the main conduit wall 16 and the wall of the first outlet 40c.

For removing or scavenging of the particle-rich flow in the gap 60a between the main portion of conduit 10 and the first outlet conduit 40c, at least one second outlet 50 is provided. The cross-sectional area of the at least one second outlet 50 is at least 1 %o of a cross-sectional area of main conduit 10. Expediently, a loss of fluid flow can be restricted so not to loose more than about 15%, preferably not more than about 10%, more preferably not more than about 5% of the flow.

Fig. 6b illustrates five subsequent bends 200a, 200b, 200c, 200d, 200e. Each of the bends 200a-200e has a deflection angle between 20 degrees and 160 degrees, preferably between 30 degrees and 120 degrees.

The subsequent bends 200b, 200c, 200d, 200e are arranged in a way to deflect the fluid flow coming from the preceding bend 200a, 200b, 200c, 200d away from the flow direction in the preceding bend 200a, 200b, 200c, 200d, i.e. the bended region 20 winds around and extends along a general main axis G.

In Fig. 6b the first bend 200a of the bended region 20 deflects the flow of the fluid 90 by e.g. an angle A of 90 degrees from z-direction to x-direction and the subsequent bend 200b deflects the flow of the fluid 90 by e.g. an angle B of 90 degrees from x-direction to y-direction. The subsequent bend 200c deflects the flow of the fluid 90 by e.g. an angle C of 90 degrees from y-direction to z-direction, the subsequent bend 200d deflects the flow of the fluid 90 by e.g. an angle D of 90 degrees from z-direction to x-direction and the subsequent bend 200e deflects the flow of the fluid 90 by e.g. an angle E of 90 degrees from x-direction to y-direction. The fluid flow is not directed back to any of the preceding bends 200a, 200b, 200c, 200d. This results in a single swirl downstream of the last bend 200e in a predominantly straight portion of the main conduit 10.

The hydraulic diameter of the primary outlet conduit 40c is typically between 30% and 95% of the hydraulic diameter of the main conduit 10. The conduit 40c arranged at the first outlet 40 extends inside the main portion of conduit 10 in order to create a gap 60a between the main portion of conduit 10 and the first outlet conduit 40c. The length of the (predominately straight) extended part between two adjacent bends 200a-200b, 200b-200c, 200c-200d, 200d-200e should be at least 1% of the hydraulic diameter and at most eight times as long as the hydraulic diameter of the conduit 10 at the respective extended parts. The mentioned gap 60a between the main portion of conduit 10, and the first outlet conduit 40c acts as a pocket where the particles under the influence of the swirl are thrown against the outer wall 16 and stay trapped between the conduit wall 16 and the wall of the first outlet 40c.

For removing or scavenging of the particle-rich flow in the gap 60a between the main portion of conduit 10 and the first outlet conduit 40c, at least one second outlet 50 is provided. The cross-sectional area of the at least one second outlet 50 is at least 1 %o of a cross-sectional area of main conduit 10. Expediently, a loss of fluid flow can be restricted so not to loose more than about 15%, preferably not more than about 10%, more preferably not more than about 5% of the flow.

In Fig. 6c and Fig. 6d, the particles are not collected in a gap between a coaxial tube and the conduit wall 16 but are collected in a collector compartment 60 arranged at the inner side of the wall of the conduit 10 downstream of the two or more bends. Instead of leaving through a coaxial (or even excentrically arranged) tube 40c (Fig. 6a, 6b), the purified fluid 90 is flowing through the centre of the conduit 10, whereas the particle rich portion of the fluid 90 is entering a collector compartment 60 arranged at the inner side of the wall 16 of the conduit 10. The collector compartment 60 extends in a longitudinal direction between a leading edge 68a and a downstream edge 68b and has a slot-like opening 66 for receiving the particle rich fraction of the fluid 90 separated from the purified fraction of the fluid 90 by swirl formation. Other than in the example presented in Figs. 3a, 3b, and the embodiments presented in Figs. 4a, 4b and 5, where the longitudinally arranged openings 66 of the collector compartments 60 have a width in a circumferential direction of the conduit 10, the longitudinally arranged openings 66 in the present examples each have a clearance 64r with a distance to the wall 16, e.g. in radial or tangential direction, which distance equals the width of the opening 66. The particle rich fraction of the fluid 90 enters the collector compartment 60 through the clearance 64r of the slot-like opening 66. The clearance 64r is established between the upper side of the collector compartment 60 and the inside of the adjoining wall portion 16c. The clearance 64r between the upper side of the collector compartment 60 and the adjoining wall portion 16c can be at most 20%, preferably at most 15%, more preferably at most 10% of the hydraulic diameter of the conduit 10 in this region where the collector compartment 60 is arranged.

The leading edge 68a of the collector compartment 60 can be open or closed. The particles can be discharged through a second outlet 50 in the wall 16 of the conduit 10 arranged in the collector compartment 60.

The collector compartment 60 and the longitudinally arranged opening 66 collector compartment 60 in Fig. 6c, respectively, are parallel to the longitudinal axis of the conduit 10 in this region 300, whereas in Fig. 6d the collector compartment 60 is tapered so that it covers a smaller area of the circumference of the wall 16 at the leading edge 68a than at the downstream edge 68b with a taper angle H between 0 degrees and 90 degrees.

Optionally, a downstream portion 66a of the opening 66 adjacent to the downstream edge 68b may be covered (not shown) for improving a confinement of the particles in the collector compartment 60.

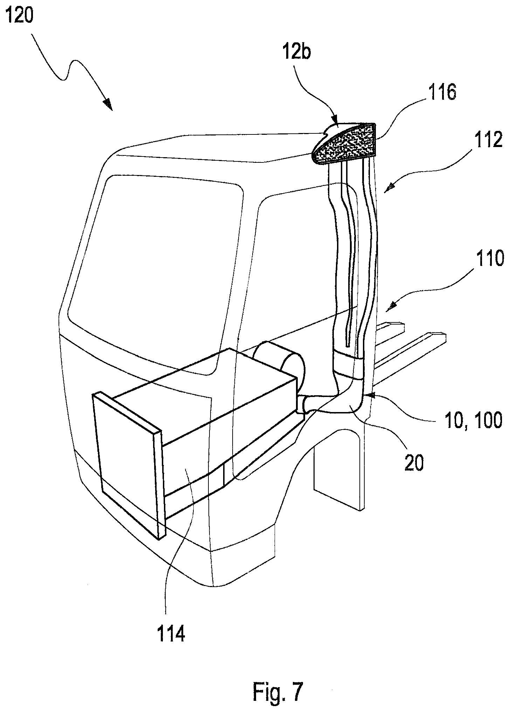

Fig. 7 displays an example embodiment of a vehicle 120, for instance a truck, with an air supply 112 for a combustion engine 114 comprising a particle trap 100 in a conduit 10. The air supply 112 is connected to the combustion engine 114 of the vehicle 120. The particle trap 100 is arranged in a bended region 20 of the conduit 10 which has to be arranged to couple the conduit 10 to the combustion engine 114 in a space efficient way. At an inlet 12b of the conduit a filter 116 is placed which may retain larger contaminants such as leaves and the like from entering the air supply 112. The inlet 12b is an air intake chamber which may also comprise a particle trap as described above.

Of course, the air supply 112 can be arranged at other positions of the vehicle 120. By way of example, the position can be chosen according to an actual design of the air supply 112 or vehicle 120, external requirements and the like.

## Claims

1. A particle trap (100) for removing particles from a fluid (90), comprising a conduit (10), the conduit (10) comprising
- a wall (16);
- a bended region (20) in the form of a curvature with at least one bend (200, 200a, 200b, 200c, 200d, 200e), the bended region (20) having an upstream side (20a) and a downstream side (20b) with respect to a longitudinal flow direction (70) of the fluid (90) along the conduit 10);
- an inlet (12) at the upstream side (20a) of the bended region 20);
- at least one first outlet (40) at the downstream side (20b) of the bended region (20);
- at least one second outlet (50) at the downstream side (20b) or downstream of the bended region (20);
- wherein the least one first outlet (40) is arranged in a first region (26), at a distance from the wall (16), such that, during operation of the conduit (10), the concentration of particles in the fluid (90) is lower at the first outlet (40) than in the vicinity of the wall (16);
- wherein the least one second outlet (50) is arranged in the vicinity of the wall (16) where during operation of the conduit (10) the concentration of particles is higher than where the at least one first outlet (40) is arranged;
- wherein the at least one bend is arranged to provide a swirl motion of the fluid in the longitudinal flow direction (70) in the conduit (10) when the fluid flows through the at least one bend during operation, and wherein the at least one first outlet (40) is arranged in a region (300) of the conduit (10), which region is arranged to, during operation, separate the fluid (90) with high particle concentration and the fluid (90) with low particle concentration from each other by means of said swirl movement of the fluid (90); and
- wherein the at least one first outlet (40) is arranged in a substantially central region (82, 82a, 82b) of a swirl (80, 80a, 80b) generated in the fluid (90) during operation of the conduit (10), **characterized in that** the bended region having an oval cross section; the inlet (12) having an oval cross section (12a) with a long main axis and a smaller minor axis (48), wherein the aspect ratio of a maximum extension of said main axis divided by a maximum extension of said minor axis is not more than 4; and the particle trap further comprises a collector compartment (60), the collector compartment (60) is arranged in parallel with the wall (16), the collector compartment (60) is arranged with a clearance from the wall (60) and extends between a first end (68a) and a second end (68b), wherein the at least one second outlet (50) is arranged at a position between the first (68a) and second (68b) ends.

2. The particle trap according to claim 1, wherein the collector compartment (60) is provided for collecting particles in a particle rich region.

3. The particle trap according to any one of claims 1 or 2, wherein the collector compartment (60) extends essentially parallel to an adjoining wall portion (16c) of the wall (16), wherein one or more openings (66) are provided for the fluid (90) with a high particle concentration, wherein preferably the one or more openings (66) are designed for the fluid (90) to enter the collector compartment (60) predominantly from a direction crosswise to the longitudinal flow direction (70).

4. The particle trap according to claim 3, wherein the at least one opening (66) is a slot extending in the longitudinal flow direction (70) along the wall (16).

5. The particle trap according to any one of the preceding claims, wherein the bend (200) is a single bend having a U-shape or an L-shape, wherein preferably the bend (200) deflects the flow of the fluid (90) by an angle between more than 0 degrees and 180 degrees, particularly by at least 60 degrees, more particularly by at least 90 degrees.

6. The particle trap according to claim 5, wherein in a bended region (20) with a single bend (200) the at least one second outlet (50) is arranged in a portion (30a) of the bend (200) downstream of a bend mid-point (30) or in the second half of the bend (200), preferably wherein the at least one second outlet (50) is arranged at an outer wall portion (16b) of the conduit (10) with respect to a centre (20c) of curvature of the bend (200).

7. The particle trap according to anyone of the preceding claims, wherein the first outlet (40) comprises two tubes (40a, 40b) arranged side by side, each tube (40a, 40b) being assigned to a central region (82a, 82b) of a swirl (80a, 80b) generated in the fluid (90).

8. The particle trap according to anyone of the preceding claims, wherein a bend (200a, 200b, 200c, 200d, 200e) in a series of bends (200a, 200b, 200c, 200d, 200e) deflects the flow of the fluid (90) by at least 20 degrees, particularly by at least 60 degrees, more particularly by at least 90 degrees, wherein preferably the at least one first outlet (40) is arranged in a predominantly straight portion of the conduit (10) adjacent the bended region (20).

9. The particle trap according to claim 8, wherein in a bended region (20) having at least two bends (200a, 200b, 200c, 200d, 200e) each bend (200) following a preceding bend (200b, 200c, 200d, 200e) deflects the fluid (90) in a direction (x, y, z) away from the preceding bend (200b, 200c, 200d, 200e).

10. The particle trap according to claim 8 or 9, wherein the collector compartment (60) is a gap (60a) between the wall (16) of the conduit (10) and a coaxial arranged pipe (40c), and/or wherein the collector compartment (60) is a pocket arranged at the wall (16) of the conduit (10).

11. The particle trap according to any one of the preceding claims, wherein the collector compartment (60) is arranged inside the conduit (10).

12. An air filter device (110) comprising a particle trap (100) according to any preceding claim.

13. An air supply (112) for an engine (114) comprising a particle trap (100) according to anyone of the claims 1 to 11.

14. An air condition device comprising a particle trap (100) according to anyone of the claims 1 to 11.

15. A vehicle (120) comprising a particle trap (100) according to anyone of the claims 1 to 11.

## Patentansprüche

1. Partikelfänger (100) zum Entfernen von Partikeln aus einem Fluid (90), umfassend einen Kanal (10), wobei der Kanal (10) umfasst
- eine Wand (16);
- einen gebogenen Bereich (20) in der Form einer Krümmung mit wenigstens einer Biegung (200, 200a, 200b, 200c, 200d, 200e), wobei der gebogene Bereich (20) eine Anströmseite (20a) und eine Abströmseite (20b) bezüglich einer longitudinalen Flussrichtung (70) des Fluids (90) entlang des Kanals (10) aufweist;
- einen Einlass (12) an der Anströmseite (20a) des gebogenen Bereichs (20);
- wenigstens einen ersten Auslass (40) an der Abströmseite (20b) des gebogenen Bereichs (20);
- wenigstens einen zweiten Auslass (50) an der Abströmseite (20b) oder abströmseitig von dem gebogenen Bereich (20);
- wobei der wenigstens eine erste Auslass (40) in einem ersten Bereich (26) angeordnet ist, in einem Abstand von der Wand (16) derart, dass während des Betriebs des Kanals (10) die Konzentration von Partikeln im Fluid (90) an dem ersten Auslass (40) geringer als in der Nähe der Wand (16) ist;
- wobei der wenigstens eine zweite Auslass (50) in der Nähe der Wand (16) angeordnet ist, wo während des Betriebs des Kanals (10) die Konzentration von Partikeln höher ist als dort, wo der wenigstens eine erste Auslass (40) angeordnet ist;
- wobei die wenigstens eine Biegung angeordnet ist, um eine Wirbelbewegung des Fluids in der longitudinalen Flussrichtung (70) in dem Kanal (10) bereitzustellen, wenn das Fluid während des Betriebs durch die wenigstens eine Biegung fließt, und wobei der wenigstens eine erste Auslass (40) in einem Bereich (300) des Kanals (10) angeordnet ist, wobei der Bereich angeordnet ist, um während des Betriebs das Fluid (90) mit der hohen Partikelkonzentration und das Fluid (90) mit der geringen Partikelkonzentration mit Hilfe der Wirbelbewegung des Fluids (90) voneinander zu trennen; und
- wobei der wenigstens eine erste Auslass (40) in einem im Wesentlichen zentralen Bereich (82, 82a, 82b) eines Wirbels (80, 80a, 80b) angeordnet ist, der in dem Fluid (90) während des Betriebs des Kanals (10) erzeugt wird, **dadurch gekennzeichnet, dass** der gebogene Bereich einen ovalen Querschnitt aufweist; der Einlass (12) einen ovalen Querschnitt (12a) mit einer langen Hauptachse und einer kleineren Nebenachse (48) aufweist, wobei das Verhältnis von einer maximalen Ausdehnung der Hauptachse dividiert durch eine maximale Ausdehnung der Nebenachse nicht mehr als 4 ist; und der Partikelfänger ferner eine Sammlerkammer (60) umfasst, wobei die Sammlerkammer (60) parallel zur Wand (16) angeordnet ist, die Sammlerkammer (60) mit einem Abstand zur Wand (60) angeordnet ist und sich zwischen einem ersten Ende (68a) und einem zweiten Ende (68b) erstreckt, wobei der wenigstens eine zweite Auslass (50) an einer Position zwischen dem ersten (68a) und dem zweiten (68b) Ende angeordnet ist.

2. Partikelfänger nach Anspruch 1, wobei die Sammlerkammer (60) zum Sammeln von Partikeln in einem partikelreichen Bereich vorgesehen ist.

3. Partikelfänger nach einem der Ansprüche 1 oder 2, wobei die Sammlerkammer (60) sich im Wesentlichen parallel zu einem angrenzenden Wandabschnitt (16c) der Wand (16) erstreckt, wobei eine oder mehrere Öffnungen (66) für das Fluid (90) mit einer hohen Partikelkonzentration vorgesehen sind, wobei vorzugsweise die eine oder mehreren Öffnungen (66) dazu ausgebildet sind, dass das Fluid (90) in die Sammlerkammer (60) hauptsächlich von einer Richtung quer zur longitudinalen Flussrichtung (70) eintritt.

4. Partikelfänger nach Anspruch 3, wobei die wenigstens eine Öffnung (66) ein Schlitz ist, der sich in der longitudinalen Flussrichtung (70) entlang der Wand (16) erstreckt.

5. Partikelfänger nach einem der vorhergehenden Ansprüche, wobei die Biegung (200) eine Einzelbiegung ist, die eine U-Form oder eine L-Form aufweist, wobei vorzugsweise die Biegung (200) den Fluss des Fluids (90) um einen Winkel zwischen mehr als 0 Grad und 180 Grad, insbesondere um wenigstens 60 Grad, und ganz besonders um wenigstens 90 Grad ablenkt.

6. Partikelfänger nach Anspruch 5, wobei in einem gebogenen Bereich (20) mit einer Einzelbiegung (200) der wenigstens eine zweite Auslass (50) in einem Abschnitt (30a) der Biegung (200) abströmseitig von einem Mittelpunkt (30) der Biegung oder in der zweiten Hälfte der Biegung (200) angeordnet ist, wobei vorzugsweise der wenigstens eine zweite Auslass (50) an einem äußeren Wandabschnitt (16b) des Kanals (10) bezüglich eines Zentrums (20c) der Krümmung der Biegung (200) angeordnet ist.

7. Partikelfänger nach einem der vorhergehenden Ansprüche, wobei der erste Auslass (40) zwei Röhren (40a, 40b) umfasst, die Seite an Seite angeordnet sind, wobei jede Röhre (40a, 40b) einem zentralen Bereich (82a, 82b) eines Wirbels (80a, 80b), der durch das Fluid (90) erzeugt wird, zugeordnet ist.

8. Partikelfänger nach einem der vorhergehenden Ansprüche, wobei eine Biegung (200a, 200b, 200c, 200d, 200e) als Reihenschaltung von Biegungen (200a, 200b, 200c, 200d, 200e) den Fluss des Fluid (90) um wenigstens 20 Grad, bevorzugt um wenigstens 60 Grad, noch bevorzugter um wenigstens 90 Grad, ablenkt, wobei vorzugsweise der wenigstens eine erste Auslass (40) in einem überwiegend geraden Abschnitt des Kanals (10) angrenzend an den gebogenen Bereich (20) angeordnet ist.

9. Partikelfänger nach Anspruch 8, wobei in einem gebogenen Bereich (20), welcher wenigstens zwei Biegungen (200a, 200b, 200c, 200d, 200e) aufweist, jede Biegung (200), die einer vorhergehenden Biegung (200b, 200c, 200d, 200e) folgt, das Fluid (90) in einer Richtung (x, y, z) weg von der vorhergehenden Biegung (200b, 200c, 200d, 200e) ablenkt.

10. Partikelfänger nach Anspruch 8 oder 9, wobei die Sammlerkammer (60) eine Lücke (60a) zwischen der Wand (16) des Kanals (10) und einer koaxial angeordneten Röhre (40c) ist und/oder wobei die Sammlerkammer (60) eine Ablage ist, die an der Wand (16) des Kanals (10) angeordnet ist.

11. Partikelfänger nach einem der vorhergehenden Ansprüche, wobei die Sammlerkammer (60) innen am Kanal (10) angeordnet ist.

12. Luftfiltervorrichtung (110) umfassend einen Partikelfänger (100) gemäß einem der vorhergehenden Ansprüche.

13. Luftzuführung (112) für einen Motor (114) umfassend einen Partikelfänger (100) gemäß einem der Ansprüche 1 bis 11.

14. Klimaanlage umfassend einen Partikelfänger (100) gemäß einem der Ansprüche 1 bis 11.

15. Fahrzeug (120) umfassend einen Partikelfänger (100) gemäß einem der Ansprüche 1 bis 11.

## Revendications

1. Piège à particules (100) pour éliminer des particules d'un fluide (90), comprenant un conduit (10), le conduit (10) comprenant
- une paroi (16) ;
- une région coudée (20) sous la forme d'une courbure avec au moins un coude (200, 200a, 200b, 200c, 200d, 200e), la région coudée (20) ayant un côté amont (20a) et un côté aval (20b) par rapport à une direction d'écoulement longitudinale (70) du fluide (90) le long du conduit (10) ;
- une entrée (12) au niveau du côté amont (20a) de la région coudée (20) ;
- au moins une première sortie (40) au niveau du côté aval (20b) de la région coudée (20) ;
- au moins une deuxième sortie (50) au niveau du côté aval (20b) ou en aval de la région coudée (20) ;
- dans lequel l'au moins une première sortie (40) est agencée dans une première région (26), à une certaine distance de la paroi (16), de sorte que, au cours du fonctionnement du conduit (10), la concentration de particules dans le fluide (90) soit plus basse au niveau de la première sortie (40) qu'au voisinage de la paroi (16) ;
- dans lequel l'au moins une deuxième sortie (50) est agencée au voisinage de la paroi (16) où, au cours du fonctionnement du conduit (10), la concentration de particules est supérieure à celle où l'au moins une première sortie (40) est agencée ;
- dans lequel l'au moins un coude est agencé pour fournir un mouvement de tourbillonnement du fluide dans la direction d'écoulement longitudinale (70) dans le conduit (10) lorsque le fluide s'écoule à travers l'au moins un coude au cours du fonctionnement, et où l'au moins une première sortie (40) est agencée dans une région (300) du conduit (10), cette région et agencée pour séparer, au cours du fonctionnement, le fluide (90) à forte concentration de particules et le fluide (90) à faible concentration de particules l'un de l'autre au moyen dudit mouvement de tourbillonnement du fluide (90) ; et
- dans lequel l'au moins une première sortie (40) est agencée dans une région essentiellement centrale (82, 82a, 82b) d'un tourbillon (80, 80a, 80b) généré dans le fluide (90) au cours du fonctionnement du conduit (10), **caractérisé en ce que** la région coudée a une section transversale ovale ; l'entrée (12) a une section transversale ovale (12a) avec un grand axe principal et un petit axe secondaire (48), où le rapport d'aspect d'une extension maximale dudit axe principal divisée par une extension maximale dudit axe secondaire est inférieur ou égal à 4 ; et le piège à particules comprend en outre un compartiment collecteur (60), le compartiment collecteur (60) est agencé parallèlement à la paroi (16), le compartiment collecteur (60) est agencé avec un jeu par rapport à la paroi (60) et s'étend entre une première extrémité (68a) et une deuxième extrémité (68b), où l'au moins une deuxième sortie (50) est agencée à une position entre les première (68a) et deuxième (68b) extrémités.

2. Piège à particules selon la revendication 1, dans lequel le compartiment collecteur (60) est prévu pour collecter des particules dans une région riche en particules.

3. Piège à particules selon l'une quelconque des revendications 1 ou 2, dans lequel le compartiment collecteur (60) s'étend de manière essentiellement parallèle à une partie de paroi adjacente (16c) de la paroi (16), où une ou plusieurs ouverture(s) (66) est/sont prévue(s) pour le fluide (90) à forte concentration de particules, où, de préférence, la ou les plusieurs ouverture(s) (66) est/sont conçue(s) pour amener le fluide (90) à entrer dans le compartiment collecteur (60) principalement à partir d'une direction transversale à la direction sens d'écoulement longitudinale (70).

4. Piège à particules selon la revendication 3, dans lequel l'au moins une ouverture (66) est une fente s'étendant dans la direction d'écoulement longitudinale (70) le long de la paroi (16).

5. Piège à particules selon l'une quelconque des revendications précédentes, dans lequel le coude (200) est un seul coude ayant une forme en U ou une forme en L, où, de préférence, le coude (200) fait dévier l'écoulement du fluide (90) d'un angle compris entre plus de 0 degré et 180 degrés, en particulier d'au moins 60 degrés, plus particulièrement d'au moins 90 degrés.

6. Piège à particules selon la revendication 5, dans lequel, dans une région coudée (20) avec un seul coude (200), l'au moins une deuxième sortie (50) est agencée dans une partie (30a) du coude (200) en aval d'un point médian de coude (30) ou dans la deuxième moitié du coude (200), où, de préférence, l'au moins une deuxième sortie (50) est agencée au niveau d'une partie de paroi extérieure (16b) du conduit (10) par rapport à un centre (20c) de courbure du coude (200).

7. Piège à particules selon l'une quelconque des revendications précédentes, dans lequel la première sortie (40) comprend deux tubes (40a, 40b) agencés côte à côte, chaque tube (40a, 40b) étant associé à une région centrale (82a, 82b) d'un tourbillon (80a, 80b) généré dans le fluide (90).

8. Piège à particules selon l'une quelconque des revendications précédentes, dans lequel un coude (200a, 200b, 200c, 200d, 200e) dans une série de coudes (200a, 200b, 200c, 200d, 200e) fait dévier l'écoulement du fluide (90) d'au moins 20 degrés, en particulier d'au moins 60 degrés, plus particulièrement d'au moins 90 degrés, où, de préférence, l'au moins une première sortie (40) est agencée dans une partie principalement droite du conduit (10) adjacente à la région coudée (20).

9. Piège à particules selon la revendication 8, dans lequel, dans une région coudée (20) ayant au moins deux coudes (200a, 200b, 200c, 200d, 200e), chaque coude (200) suivant un coude précédent (200b, 200c, 200d, 200e) fait dévier le fluide (90) dans une direction (x, y, z) s'éloignant du coude précédent (200b, 200c, 200d, 200e).

10. Piège à particules selon la revendication 8 ou 9, dans lequel le compartiment collecteur (60) est un écart (60a) entre la paroi (16) du conduit (10) et un tuyau (40c) agencé de manière coaxiale, et/ou où le compartiment collecteur (60) est une poche agencée au niveau de la paroi (16) du conduit (10).

11. Piège à particules selon l'une quelconque des revendications précédentes, dans lequel le compartiment collecteur (60) est agencé à l'intérieur du conduit (10).

12. Dispositif de filtration d'air (110) comprenant un piège à particules (100) selon l'une des revendications précédentes.

13. Dispositif d'alimentation en air (112) pour un moteur (114) comprenant un piège à particules (100) selon l'une quelconque des revendications 1 à 11.

14. Dispositif de climatisation comprenant un piège à particules (100) selon l'une quelconque des revendications 1 à 11.

15. Véhicule (120) comprenant un piège à particules (100) selon l'une quelconque des revendications 1 à 11.
